# FASCICULE DE BREVET EUROPEEN

(11) **EP 2 589 184 B1**
(45) Date de publication et mention de la délivrance du brevet: **28.08.2019**
(21) Numéro de dépôt: 11737995.8
(22) Date de dépôt: 20.06.2011
(51) Int. Cl.: G05B 23/02, H04L 12/28

(54) **GESTION DE PANNE APPLICATIVE DANS UN SYSTEME D'EQUIPEMENTS DOMESTIQUES**
VERWALTUNG VON ANWENDUNGSFEHLERN IN EINEM SYSTEM VON HAUSHALTSGERÄTEN
MANAGING APPLICATION FAULTS IN A SYSTEM OF HOUSEHOLD DEVICES

(30) Priorité: 29.06.2010 FR 1055263
(43) Date de publication de la demande: 08.05.2013
(73) Titulaire: Orange, 75015 Paris (FR)
(72) Inventeur: BLACHE, Fabrice, F-38190 Bernin (FR); DEMOTTIE, Christophe, F-38760 Varces Allieres Et Risset (FR); MARTIGNE, Patricia, F-38330 Saint Ismier (FR)
(86) Numéro de dépôt international: PCT/FR2011/051414
(87) Numéro de publication internationale: WO 2012/001267

(56) Documents cités:
- EP-A1- 1 758 316
- US-A1- 2006 044 152
- US-A1- 2009 287 456

## Description

L'invention se rapporte au domaine de la commande à distance d'équipements domestiques.

Elle se rapporte en particulier au domaine des systèmes dans lequel un module de gestion, appelé généralement "home automation box", gère de façon centralisée le fonctionnement d'équipements domestiques à partir notamment d'informations remontées par des capteurs.

Des tels systèmes connus sont par exemple des systèmes de gestion du confort, de la sérénité et/ou de l'énergie, par exemple un système gérant l'ouverture ou la fermeture des volets d'une habitation en fonction de la luminosité extérieure ou un système permettant de diminuer la température intérieure d'une maison à partir d'informations fournies par des détecteurs de présence.

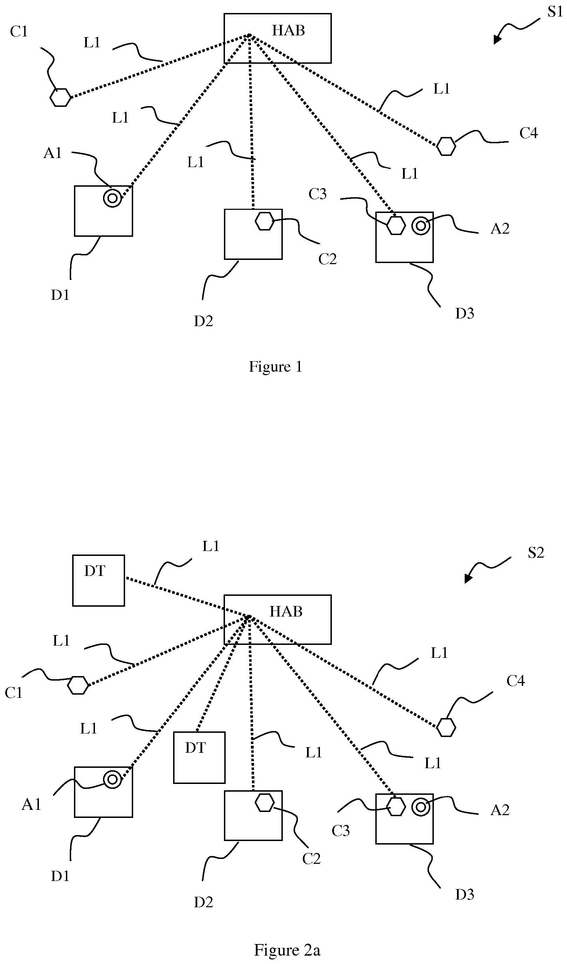

La **figure 1** illustre un exemple d'un système S1 de l'état de l'art.

Le système S1 comporte une pluralité d'équipements, par exemple cinq équipements, connectés à un module de gestion HAB (Home Automation Box, en anglais) via une liaison de communication L1, par exemple une liaison sans fil. La pluralité d'équipements comprend des équipements de collecte et des équipements à commander. Un équipement de collecte est un capteur (C1, C4) ou un équipement domestique (D2, D3) comportant un ou plusieurs capteurs (C2, C3). Les capteurs C1, C2, C3, C4... sont aptes à collecter des données et à les remonter au module de gestion HAB. Un équipement à commander est un équipement domestique (D1, D3) comportant un ou plusieurs actionneurs (A1, A2) aptes à piloter ces équipements domestiques. Il est à noter qu'un équipement peut comporter un capteur et un actionneur. En fonction des données remontées par les capteurs, le module de gestion HAB transmet des commandes aux actionneurs en fonction de règles d'usage prédéterminées. Par exemple, les capteurs C1, C2... sont des capteurs de luminosité et les actionneurs A1, A2 permettent d'ouvrir et fermer les volets. Une règle d'usage mémorisée dans une mémoire du module de gestion HAB permet de commander l'ouverture des volets si le capteur C1 et le capteur C2 indique une luminosité élevée et la fermeture des volets sinon.

Une panne applicative survenant au niveau du module de gestion entraine un arrêt de fonctionnement du système. Les équipements ne reçoivent pas de nouvel ordre et restent dans l'état dans lequel ils étaient au moment de la panne. Par exemple, les volets restent fermés en plein jour.

Cette situation est difficilement acceptable par le client, surtout si la panne doit se prolonger dans le temps.

Il existe donc un besoin d'une solution permettant de pallier une panne applicative du module de gestion.

L'invention vient améliorer la situation.

Le document US2009/0287456 décrit un système de capteurs distribué dans lequel des données collectées par des capteurs sont remontées à un processeur central via un module noeud. Le processeur central est apte à traiter les données reçues et à transmettre des instructions vers des modules noeud qui communiquent ensuite avec des capteurs et/ou des déclencheurs qui lui sont rattachés. Dans ce système, les modules noeud vérifient l'activité du processeur central et génèrent une alarme en cas de détection de dysfonctionnement.

Le système comporte également un processeur central secondaire, similaire au processeur central. Ce processeur central secondaire prend le relai du processeur central en cas de dysfonctionnement de celui-ci. Le service rendu par le deuxième processeur central est le même que celui rendu par le processeur central.

A cet effet, l'invention se rapporte à un procédé de gestion conforme à la revendication 1.

Elle est mises en oeuvre dans un système comprenant un module de gestion et un ensemble d'équipements connectés au module de gestion via une première liaison de communication, ledit ensemble comprenant au moins un équipement à commander et au moins un équipement de collecte, ledit module de gestion étant apte à déterminer au moins une commande de pilotage en fonction de données reçues d'au moins un équipement de collecte via la première liaison de communication et à transmettre ladite au moins une commande de pilotage déterminée à au moins un équipement à commander.

Le procédé comporte les étapes suivantes :
- surveillance d'une activité de signalisation applicative dudit module de gestion;
- détection d'une absence d'activité de signalisation applicative dans un délai prédéterminé;
- déclenchement d'un service minimum par transmission, à destination d'au moins un équipement du système, d'un message d'alerte en cas d'absence d'activité de signalisation applicative détectée.

Une absence d'activité de signalisation applicative du module de gestion, c'est-à-dire une absence de traitement des signaux de données reçus ou une absence d'émission de signaux de commande tels que, par exemple des messages de commandes de pilotage, par le module de gestion, pendant un délai prédéterminé, laisse présager d'une panne applicative du module de gestion. Selon l'invention, la vérification continue du fonctionnement applicatif du module de gestion permet de détecter une panne applicative dès qu'elle survient. Un message d'alerte transmis à tout ou partie des équipements du système permet de signaler la panne à ces équipements. Les équipements ayant reçu le message d'alerte mettent alors en oeuvre un service minimum dans lequel ils communiquent directement entre eux et non plus avec le module de gestion. Ce service minimum permet notamment à un équipement à commander d'être commandé directement par un ou plusieurs équipements de collecte ou capteurs.

Le procédé de gestion selon l'invention est par exemple mis en oeuvre dans un dispositif de détection connecté au module de gestion ou intégré dans un équipement du système.

Selon un mode de réalisation particulier du procédé de gestion, l'étape de surveillance comprend une étape de réception de messages de fonctionnement en provenance du module de gestion et en ce que l'absence d'activité est détectée en cas d'absence de réception de message de fonctionnement dans un délai prédéterminé.

La réception de messages spécifiques émis régulièrement par le module de gestion à un ou plusieurs dispositifs prédéterminés est un moyen simple de vérifier que le module de gestion est actif. L'absence de réception d'un tel message dans un délai prédéterminé indique une panne applicative du module de gestion.

Selon un mode de réalisation particulier du procédé de gestion, l'étape de surveillance comprend une étape d'envoi régulier d'un message de surveillance et l'absence d'activité est détectée par l'absence de réception d'un message de réponse audit message de surveillance dans le délai prédéterminé.

La non réponse à un message de surveillance dans un délai prédéterminé permet de détecter facilement une anomalie dans le fonctionnement applicatif du module.

Le message de réponse consiste, par exemple, à incrémenter la valeur d'un compteur d'un dispositif de détection de façon à empêcher la décrémentation de ce compteur jusqu'à zéro, l'atteinte de la valeur nulle correspondant à un dépassement du délai prédéterminé.

Selon une caractéristique particulière, la première liaison de communication est une liaison sans fil sur laquelle l'étape de transmission d'un message d'alerte selon l'invention est effectuée en mode broadcast. Cette configuration permet de prévenir l'ensemble des équipements avec l'envoi d'un seul message d'alerte.

L'invention se rapporte également à un procédé de mise en oeuvre d'un service minimum conforme à la revendication 5. Ce procédé est mis en oeuvre dans un système comprenant un module de gestion et un ensemble d'équipements connectés au module de gestion via une première liaison de communication, ledit ensemble comprenant au moins un équipement à commander et au moins un équipement de collecte, ledit au moins un équipement de collecte étant apte à transmettre des données audit module de gestion via la première liaison de communication.

Ce procédé comporte les étapes suivantes :
- réception d'un message d'alerte;
- sur réception d'un message d'alerte, transmission ou réception d'au moins un message de commande d'au moins un équipement à commander via une deuxième liaison de communication.

La réception d'un message d'alerte par un dispositif de mise en oeuvre d'un service minimum relié à ou installé dans un équipement de collecte, permet de déclencher l'établissement d'un service minimum dans lequel une ou plusieurs commandes de pilotage sont transmises directement à un actionneur d'un équipement à commander par un équipement de collecte.

La réception d'un message d'alerte par un dispositif de mise en oeuvre d'un service minimum relié à ou installé dans un équipement à commander, permet de déclencher l'établissement d'un service minimum dans lequel un actionneur d'un équipement à commander reçoit directement une ou plusieurs commandes de pilotage émises par un équipement de collecte.

Selon un mode de réalisation particulier du procédé de mise en oeuvre d'un service minimum, l'étape de transmission ou réception est précédée d'une étape d'activation de ladite deuxième liaison de communication avec ledit au moins un équipement à commander.

Ce mode de réalisation, particulièrement adapté aux liaisons de communications sans fil, permet un appairage direct entre équipements de collecte et équipements à commander.

Selon une première caractéristique particulière de ce mode de réalisation, l'étape d'activation est effectuée par un dispositif inséré dans un équipement de collecte et il n'est pas nécessaire de modifier l'équipement à commander, qui traite de façon similaire les commandes provenant d'un module de gestion ou d'un équipement de collecte.

Selon une deuxième caractéristique particulière de ce mode de réalisation, l'étape d'activation est effectuée d'une part par un dispositif inséré dans un équipement de collecte et d'autre part par un dispositif inséré dans un équipement à commander. Cette configuration qui permet un appairage direct et mutuel entre les deux équipements augmente la sécurité en évitant l'exécution de commandes en provenance d'un équipement inconnu par l'équipement à commander.

Selon une caractéristique particulière de ce mode de réalisation du procédé de mise en oeuvre d'un service minimum, l'étape d'activation comporte une étape d'obtention, par un équipement, d'au moins un identifiant d'un ou plusieurs équipements avec lequel il doit s'appairer.

Une liste des équipements avec lequel un équipement doit s'appairer directement en cas de réception d'un message d'alerte, enregistrée dans une mémoire dudit équipement permet une mise en oeuvre simple et rapide d'un service minimum.

L'invention se rapporte également à un dispositif de détection selon la revendication 8 comportant :
- des moyens de surveillance d'une activité de signalisation applicative dudit module de gestion;
- des moyens de détection d'une absence d'activité de signalisation applicative dans un délai prédéterminé;
- des moyens de déclenchement d'un service minimum par transmission, à destination d'au moins un équipement du système, d'un message d'alerte en cas d'absence d'activité de signalisation applicative détectée.

Ce dispositif de détection est soit un dispositif autonome installé dans le système, soit intégré dans un équipement de collecte ou encore dans un équipement à commander.

Dans un mode de réalisation, le dispositif de détection est intégré à tout ou partie des équipements du système.

Selon une caractéristique particulière de ce mode de réalisation, certains dispositifs de détection sont inactifs et sont activés sur commande. Ce mode de réalisation simple à mettre en oeuvre permet une souplesse du système. Le ou les dispositifs actifs sont par exemple choisis en fonction de la localisation géographique du dispositif dans le système, de sa portée de communication ou encore en fonction du type d'alimentation électrique de l'équipement dans lequel il est installé.

L'invention se rapporte également à un équipement d'un système selon la revendication 9 comprenant des moyens de réception aptes à recevoir au moins une commande de pilotage en provenance d'un module de gestion via une première liaison de communication caractérisé en ce qu'il comporte en outre :
- des moyens de réception d'un message d'alerte;
- des moyens de réception d'au moins un message de pilotage en provenance d'un équipement de collecte, via une deuxième liaison de communication, suite à la réception du message d'alerte.

L'invention se rapporte encore à un système selon la revendication 12 comprenant un module de gestion et un ensemble d'équipements connectés au module de gestion via une première liaison de communication, ledit ensemble comprenant au moins un équipement à commander et au moins un équipement de collecte, ledit module étant apte à déterminer au moins une commande de pilotage en fonction de données reçues d'au moins un équipement de collecte et à transmettre ladite au moins une commande de pilotage déterminée à au moins un équipement à commander caractérisé en ce qu'il comprend en outre au moins un dispositif de détection et au moins un dispositif de mise en oeuvre d'un service minimum tels que décrits précédemment.

L'invention se rapporte encore à un produit programme d'ordinateur selon la revendication 13 comprenant des instructions pour mettre en oeuvre les étapes d'un procédé de gestion tel que décrit précédemment, lorsqu'il est chargé et exécuté par un processeur.

L'invention concerne enfin un produit programme d'ordinateur selon la revendication 14 comprenant des instructions pour mettre en oeuvre les étapes d'un procédé de mise en oeuvre d'un service minimum tel que décrit précédemment, lorsqu'il est chargé et exécuté par un processeur.

D'autres particularités et avantages de la présente invention apparaitront dans la description suivante de modes de réalisation donnés à titre d'exemples non limitatifs, en référence aux dessins annexés, dans lesquels :
- la figure 1 est un schéma illustrant un système de gestion de l'état de l'art;
- la figure 2a est un schéma illustrant un système de gestion selon un mode de réalisation de l'invention;
- la figure 2b est un schéma illustrant la transmission d'un message d'alerte dans le système de gestion;
- la figure 2c est un schéma illustrant un exemple de communication établies suite à la réception d'un message d'alerte dans le système de gestion;
- la figure 3 est un organigramme illustrant les différentes étapes d'un procédé de gestion, respectivement d'un procédé de mise en oeuvre d'un service minimum, mis en oeuvre dans le système selon un premier mode de réalisation,
- la figure 4 est un schéma-bloc illustrant des dispositifs d'un système de gestion selon un mode de réalisation de l'invention;
- la figure 5 est un diagramme illustrant des tables de routage enregistrées dans des dispositifs d'un système de gestion selon un mode de réalisation de l'invention;
- la figure 6 est un organigramme illustrant les différentes étapes d'un procédé de mise en oeuvre d'un service minimum selon un deuxième mode de réalisation;
- la figure 7 est un schéma-bloc représentant un dispositif apte à réaliser les étapes d'un procédé de mise en oeuvre d'un service minimum selon un mode de réalisation de l'invention.

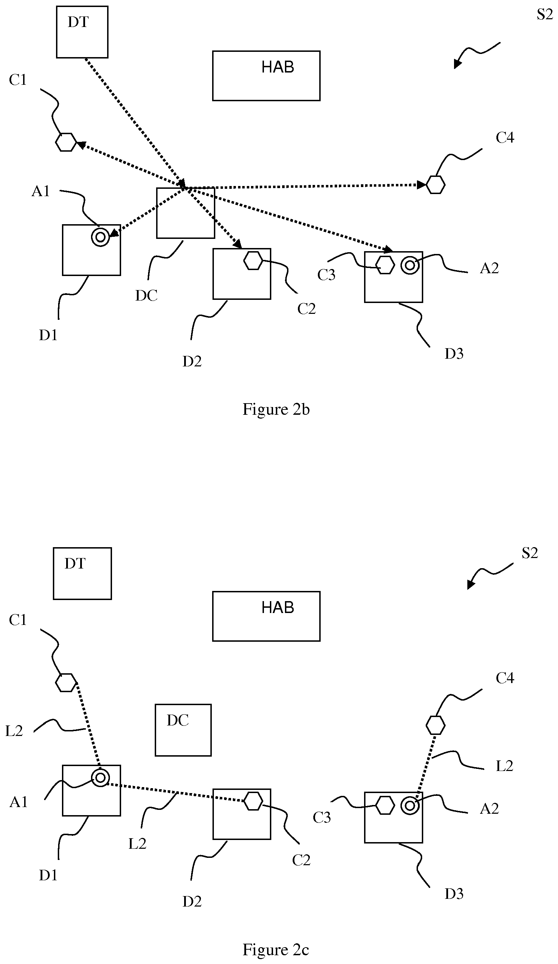

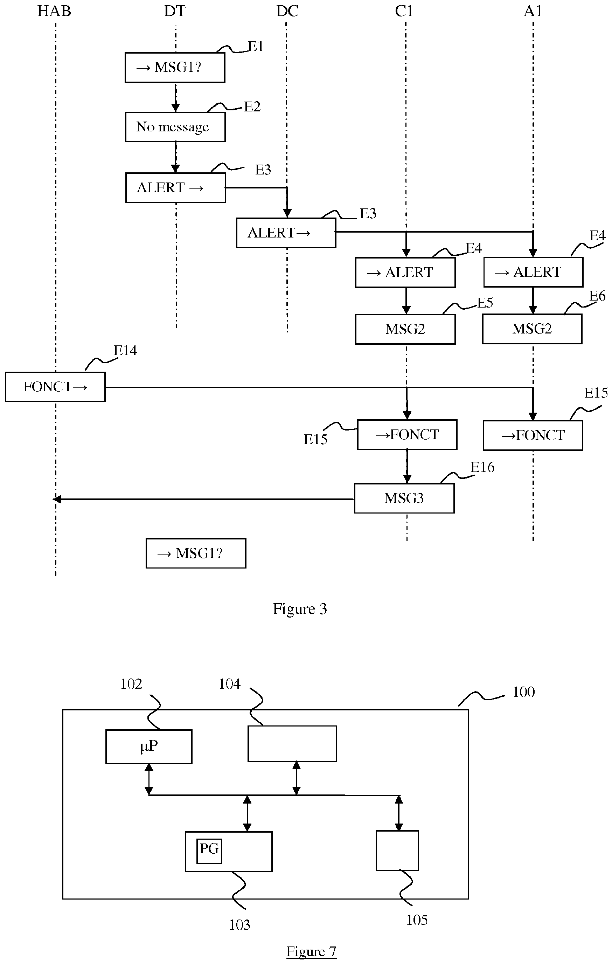

Un premier mode de réalisation de l'invention va maintenant être décrit en référence aux figures 2a, 2b, 2c et 3.

En référence à la **figure 2a**, un système S2 comprend un module de gestion HAB et une pluralité de dispositifs, par exemple sept dispositifs, aptes à communiquer avec le module de gestion HAB via une première liaison de communication L1. La pluralité de dispositifs comprend des équipements de collecte, des équipements à commander, un dispositif de détection DT et un dispositif de coordination DC. Un équipement de collecte est soit un capteur, soit un équipement domestique comportant un ou plusieurs capteurs. Les équipements à commander comportent un ou plusieurs actionneurs. Les équipements de collecte sont ici les capteurs C1 et C4 ainsi que les équipements domestiques D2 et D3. L'équipement domestique D2 comporte un capteur C2 et l'équipement domestique D3 comporte un capteur C3. Les équipements à commander sont ici les dispositifs D1 et D3. Ils comportent chacun un actionneur A1, A2. L'équipement D3 est à la fois un équipement de collecte et un équipement à commander.

Les équipements de collecte et les équipements à commander représentent des équipements.

Le système S2 est, par exemple, installé dans un bâtiment, par exemple une maison d'habitation.

Le capteur C1 est par exemple un détecteur de présence, installé dans le salon de la maison. Le capteur C2 est par exemple un détecteur de luminosité, installé sur un bord extérieur d'une fenêtre du salon. Les capteurs C3 et C4 sont par exemple des capteurs de mesure de température installés dans des chambres de l'habitation.

L'actionneur A1 est par exemple un interrupteur relié à une lampe du salon et l'actionneur A2 est par exemple un régulateur de température installé dans une des chambres.

A titre d'alternative, le nombre et/ou le type des capteurs, respectivement des actionneurs, sont différents.

Dans le mode de réalisation décrit, la première liaison de communication L1 est une liaison sans fil de typeWifi.

A titre d'alternative, la première liaison sans fil est une liaison sans fil de type Bluetooth ou Zigbee ou encore une liaison de communication filaire.

Le module de gestion HAB est apte à recevoir des résultats de mesure effectuées par les capteurs C1, C2, C3..., à construire et à transmettre une commande de pilotage à un actionneur en fonction des résultats de mesure d'un ou plusieurs capteurs et d'une ou plusieurs règles d'usage.

Par exemple, une règle d'usage est «si une présence est détectée par le capteur C1 et si une luminosité détectée par le capteur C2 est "NUIT", alors transmettre une commande "ON" à l'actionneur A1 de l'équipement à commander E2».

Les résultats de mesure transmis par un capteur sont par exemple une commande de changement d'état (par exemple passage de JOUR à NUIT).

A titre d'alternative, un résultat de mesure est un état (NUIT) ou encore des données de collecte (par exemple un indice de luminosité).

A titre d'alternative, le capteur C1 transmet les données collectées au module de gestion, à intervalles réguliers.

Dans le mode de réalisation décrit, le dispositif de coordination DC est un dispositif autonome. A titre d'alternative, le dispositif de coordination DC est intégré dans le dispositif de détection DT ou encore dans un équipement du système. L'emplacement du dispositif de coordination est par exemple choisi en fonction de critères d'autonomie d'énergie pour pouvoir fonctionner en cas de coupure électrique ou de capacité de portée de communication vis-à-vis des autres équipements du système.

Les étapes d'un procédé de gestion de l'invention, respectivement d'un procédé de mise en oeuvre d'un service minimum, mis en oeuvre dans le système S2 vont maintenant être décrites en référence à la **figure 3**.

Les étapes E1, E2 et E3 représentent les étapes du procédé de gestion mises en oeuvre par le dispositif de détection DT.

Les étapes E4 et E5 représentent les étapes du procédé de mise en oeuvre d'un service minimum mises en oeuvre par un dispositif de collecte du système, par exemple le capteur C1.

Lors d'une première étape E1, le dispositif de détection DT surveille l'activité de signalisation applicative du module de gestion HAB. Dans le mode de réalisation décrit, cette étape consiste pour le dispositif de détection DT à scruter l'arrivée de messages applicatifs en provenance du module de gestion HAB via la première liaison de communication L1.

Un message applicatif est un message transmis au niveau applicatif.

Par exemple, le dispositif de détection DT attend l'arrivée régulière de messages de fonctionnement MSG1 émis par le module de gestion HAB.

A titre d'alternative, le dispositif de détection DT émet régulièrement un message de surveillance à destination du module de gestion HAB et le module de gestion HAB envoie un message de réponse au message de surveillance.

Encore, à titre d'alternative, le dispositif de détection DT est apte à détecter les messages applicatifs émis par le module de gestion HAB à destination des dispositifs du système.

Lors d'une étape E2, le dispositif de détection DT détecte l'absence d'activité de signalisation applicative du module de gestion HAB dans un délai prédéterminé.

Par exemple, le module de détection DT détecte l'absence de réception de message de fonctionnement MSG1 dans un délai prédéterminé.

L'étape E2 est suivie d'une étape E3 lors de laquelle le dispositif de détection DT transmet un message d'alerte ALERT au dispositif de coordination DC et le dispositif de coordination DC retransmet ce message ALERT à l'ensemble des équipements du système S2.

La **figure 2b** illustre la transmission du message d'alerte par le dispositif de détection DT au dispositif de coordination DC et la transmission du message d'alerte par le dispositif de coordination DC aux équipements du système, c'est-à-dire aux équipements de collecte et aux équipements à commander.

A titre d'alternative, le message retransmis à chaque équipement par le dispositif de coordination DC est adapté en fonction dudit équipement par le dispositif de coordination DC.

Egalement à titre d'alternative, lors de l'étape E3, le dispositif de détection DT transmet directement le message d'alerte ALERT aux équipements du réseau.

Encore à titre d'alternative, le message d'alerte ALERT est transmis seulement à certains équipements prédéterminés.

Le message d'alerte ALERT est reçu par les équipements lors d'une étape E4.

Dans le mode de réalisation décrit ici, l'équipement à commander D1 contenant l'actionneur A1 reçoit le message ALERT mais ne le traite pas. Dans ce mode de réalisation, un actionneur exécute toute commande lui parvenant, quelle soit transmise par le module de gestion HAB ou un autre dispositif du système. Ce mode de réalisation ne nécessite pas l'installation de dispositifs de mise en oeuvre d'un service minimum au niveau des actionneurs et permet ainsi un coût de mise en oeuvre peu élevé.

Lors d'une étape E5, les équipements de collecte, ayant reçu le message d'alerte ALERT, mettent en oeuvre un service minimum, ou mode de repli, dans lequel ils transmettent des commandes de pilotage à des équipements à commander prédéterminés via une deuxième liaison de communication L2.

La **figure 2c** illustre un exemple de communications établies par les équipements de collecte lors de la réception d'un message d'alerte.

Par exemple, lors de l'étape E5, le capteur C1, ayant reçu le message d'alerte ALERT, détecte un changement dans les mesures qu'il effectue, par exemple un passage "jour/nuit", construit un message de commande MSG2 et transmet le message construit MSG2 à l'actionneur A1 via la deuxième liaison de communication L2.

La liaison de communication L2 est ici une liaison de communication entre le capteur C1 et l'actionneur A1.

La deuxième liaison de communication L2 est une liaison sans fil de typeWifi.

A titre d'alternative, la deuxième liaison sans fil est une liaison sans fil de type Bluetooth ou Zigbee ou encore une liaison de communication filaire.

Le message MSG2 est reçu par l'actionneur A1 lors d'une étape E6 et l'actionneur A1 exécute la commande reçue, par exemple le passage en position "ON" de l'interrupteur de la lampe.

Les étapes E5 et E6 sont ensuite réitérées en fonction de mesures effectués par les capteurs.

Lors d'une étape E14, le module de gestion HAB transmet aux équipements du système, un message de fonctionnement FONCT.

Le message de fonctionnement FONCT est reçu par les équipements lors d'une étape E15.

Lors d'une étape E16, le capteur C1 ayant reçu le message de fonctionnement FONCT et ayant des résultats de mesures à transmettre, transmet un message MSG3 contenant le résultat des mesures effectuées au module de gestion HAB via la première liaison de communication L1.

Dans le mode de réalisation décrit, le message d'alerte ALERT est généré et transmis par le module de détection DT. A titre d'alternative ou en complément de ce mode de réalisation, le message d'alerte ALERT est généré et transmis par le module de gestion HAB, par exemple dans un cas où le module de gestion HAB est sur le point de se mettre en « veille applicative », à des fins de mise à jour de certains programmes logiciels applicatifs par exemple.

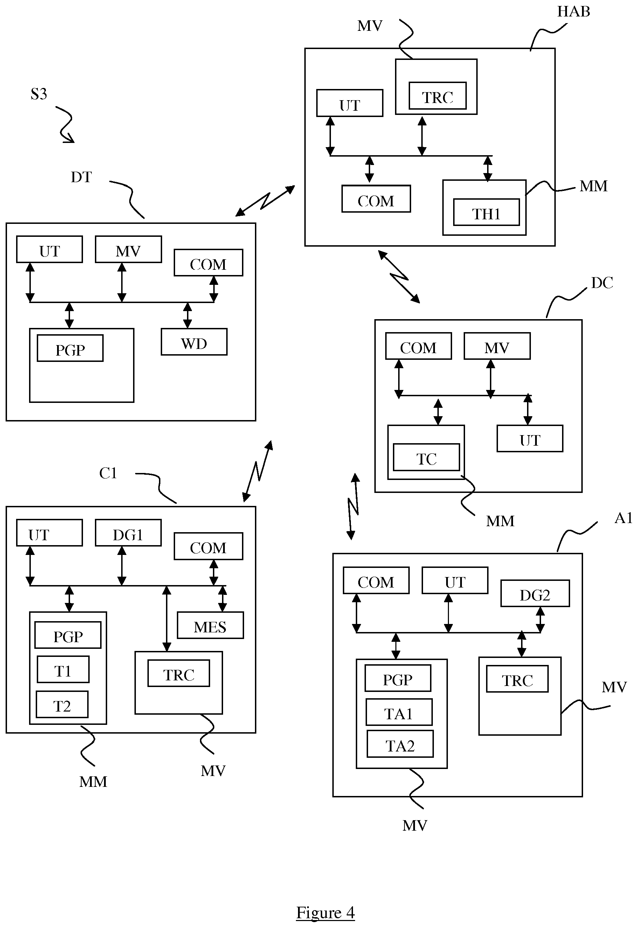

Un mode de réalisation détaillé du procédé de gestion, respectivement du procédé de mise en oeuvre d'un service minimum, dans lequel les liaisons de communication sont des liaisons de type Zigbee, va maintenant être décrit en référence aux figures 4 à 6

Comme illustré sur la **figure 4**, un système S3 comprend cinq dispositifs : un module de gestion HAB, un dispositif de détection DT, un dispositif de coordination DC, un capteur C1 et un actionneur A1. Le capteur C1 représente un dispositif de collecte. L'actionneur A1 est inséré dans un équipement à commander E.

Chaque dispositif comporte de façon connue, notamment une unité de traitement UT équipée d'un microprocesseur, une mémoire morte de type ROM ou EEPROM MM, une mémoire vive de type RAM MV.

Chaque dispositif comprend également un module de communication COM apte à communiquer avec un ou plusieurs dispositifs distants via une liaison de communication. Le ou les dispositifs distants, et en conséquence la liaison de communication, sont par exemple déterminés par une table de routage courant TRC enregistrée par exemple dans une mémoire vive MV du dispositif.

Lors de la mise sous tension d'un dispositif, une table de routage est sélectionnée. La table de routage sélectionnée est par exemple lue dans la mémoire morte MM du dispositif et enregistrée dans la table de routage courante TRC de la mémoire vive.

Une table de routage contient, par exemple, au moins un identifiant du dispositif source, c'est-à-dire du dispositif dans lequel elle est enregistrée, et au moins un identifiant d'au moins un dispositif destinataire, c'est-à-dire un dispositif avec lequel le dispositif est apte à communiquer.

A titre d'alternative, l'identifiant du dispositif source est enregistré dans la mémoire morte MM indépendamment de la table de routage et la table de routage ne comprend qu'un ou plusieurs identifiants d'un ou plusieurs dispositifs destinataires.

Suite à la sélection de la table de routage courant TRC, une procédure d'appairage est exécutée. De façon connue, cette procédure consiste pour un dispositif source à envoyer un message de demande d'appairage à un ou plusieurs dispositifs destinataire inscrits dans la table de routage courante TRC. Sur réception du message de demande d'appairage, le dispositif destinataire vérifie les identifiants reçus en fonction de sa table de routage courant TRC et, en cas de vérification positive, renvoie un message d'accord. Cette procédure d'appairage permet d'activer une liaison de communication entre deux dispositifs.

Le capteur C1 possède également un module de mesures MES et un dispositif de mise en oeuvre d'un service minimum DG1.

La mémoire morte MM du capteur C1 comporte des registres mémorisant un programme d'ordinateur PGE comportant des instructions de programme adaptées à réaliser les étapes d'un procédé de mise en oeuvre d'un service minimum selon l'invention.

Lors de la mise sous tension, le programme PGE stocké dans la mémoire de type EEPROM MM1 est transféré dans la mémoire vive MV du capteur C1 qui contiendra alors un code exécutable ainsi que des registres pour mémoriser les variables nécessaires à la mise en oeuvre d'un procédé de mise en oeuvre d'un service minimum tel que décrit en détail dans la suite de la description.

Le module de mesures MES du capteur C1 est apte à effectuer régulièrement des mesures, par exemple des mesures de luminosité, à détecter un changement de luminosité à partir des mesures effectuées et à transmettre un message de résultats, par exemple au module de communication COM. Par exemple le message de résultats est une commande contenant un paramètre indicateur de l'action à réaliser par l'équipement à commander (par exemple, transmission de la commande ON à destination de l'actionneur dans la lampe).

Le dispositif de détection DT possède également un module de surveillance WD.

La mémoire morte MM du dispositif de détection DT comporte des registres mémorisant un programme d'ordinateur PGP comportant des instructions de programme adaptées à réaliser les étapes d'un procédé de gestion selon l'invention.

Lors de la mise sous tension, le programme PGP stocké dans la mémoire de type EEPROM MM est transféré dans la mémoire vive MV du dispositif de détection DT qui contiendra alors un code exécutable ainsi que des registres pour mémoriser les variables nécessaires à la mise en oeuvre d'un procédé de gestion tel que décrit en détail dans la suite de la description.

De manière plus générale un moyen de stockage, lisible par un ordinateur ou par un microprocesseur, intégré ou non au dispositif, éventuellement amovible, mémorise un programme mettant en oeuvre les étapes d'un procédé de gestion selon l'invention.

L'actionneur A1 possède également un module de commande CMD apte à exécuter un ordre de commande, par exemple fermer le volet ou remonter la température ambiante.

Lors d'une étape préalable, une ou plusieurs tables de routage sont enregistrées dans la mémoire morte de chaque dispositif. Plus précisément, une table de routage TH1 enregistrée dans le module de gestion HAB contient au moins un identifiant du dispositif de détection DT, de chaque dispositif de collecte et de chaque équipement à commander. Une première T1 et une deuxième T2 tables de routage sont enregistrées dans le capteur C1. Une première TA1 et une deuxième TA2 tables de routage sont enregistrées dans l'actionneur A1. Une table de routage TC enregistrée dans le dispositif de coordination DC contient au moins un identifiant de chaque équipement. Les tables de routage T1 et TA1 contiennent au moins un identifiant du module de gestion HAB. Les tables de routage T2 contient un identifiant de l'actionneur A2 et la table de routage TA2 contient au moins un identifiant du capteur C1.

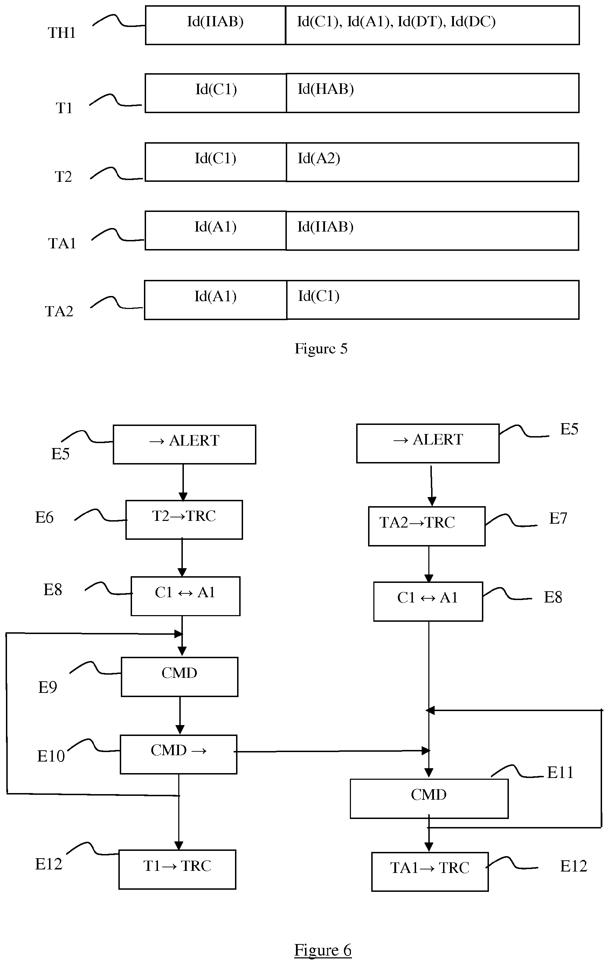

La **figure 5** illustre des exemples de table de routage TH1, T1, T2, TA1 et TA2 enregistrées dans la mémoire morte des dispositifs HAB d'identifiant Id(HAB), C1 d'identifiant Id(C1) ou A1 d'identifiant Id(A1) respectivement.

Lors d'une étape de démarrage, les premières tables de routage sont lues dans les mémoires morte et enregistrées dans les mémoires vives. Puis, le module de gestion HAB initie une procédure d'appairage avec chaque dispositif C1, A1, DT et DC.

Suite à cette procédure d'appairage, une première liaison de communication est établie entre chaque dispositif et le module de gestion HAB.

Suite aux étapes d'appairage, le module de gestion HAB est apte à recevoir des messages en provenance des capteurs, à construire des messages de pilotage en fonction des messages reçus et de règles d'usage et à transmettre les messages de pilotage construits à un ou plusieurs actionneurs appairés.

En parallèle, le module de surveillance WD du dispositif de détection DT surveille l'activité du module de gestion HAB (étape E0).

Dans le mode de réalisation décrit, le module WD est par exemple créé sur la base de la norme ZigBee (ZigBee Spécification, ZigBee Document 053474r17, Octl9, 2007).

Le module WD est adapté pour attendre un message de fonctionnement en provenance du module de gestion HAB. Le message de fonctionnement est un message applicatif, par exemple une commande de type "Arm Command". Lors de la réception de cette commande, le module WD initialise ou réinitialise un compteur avec une valeur prédéterminée. Le compteur est ensuite décrémenté au cours du temps.

Lors de l'étape E1, le module de surveillance WD détecte que le compteur est à la valeur 0, indiquant qu'aucun message applicatif en provenance du module de gestion HAB a été reçu depuis un délai prédéterminé. Cette absence de réception est significative d'une panne applicative du module de gestion HAB.

Le module de surveillance WD transmet alors un message d'alerte ALERT au dispositif de coordination DC (étape E3). Le message d'alerte transmis est par exemple une commande "Default Binding Command". Le message d'alerte est reçu par le dispositif de coordination DC et retransmis en mode broadcast. aux équipements de collecte et aux équipements à commander du système S3. Le dispositif DC est positionné dans le système de façon à communiquer par liaison de communication sans fil avec l'ensemble des équipements. Il permet de relayer le message d'alerte en provenance du dispositif de détection DT.

A titre d'alternative, le module de surveillance WD transmet le message d'alerte en mode broadcast aux équipements de collecte et aux équipements à commander du système S3

A titre d'alternative, la commande est transmise en mode multicast.

En référence à la **figure 6**, un mode de réalisation du procédé de mise en oeuvre d'un service minimum mis en oeuvre par les dispositifs de mise en oeuvre d'un service minimum du capteur C1 et de l'actionneur A2 respectivement est maintenant décrit.

Le message d'alerte est reçu par les équipements du réseau (étape E4), et notamment par le capteur C1 et par l'actionneur A1.

Puis, lors d'une étape E6, le dispositif de mise en oeuvre d'un service minimum DG1 du capteur C1 accède à la deuxième table de routage (Default binding table en anglais) T2 enregistrée dans sa mémoire morte MM et la mémorise dans la table de routage courante TRC enregistrée dans la mémoire vive MV du capteur C1. La deuxième table de routage T2 remplace ainsi la première table de routage T1 du capteur C1.

Lors d'une étape E7, réalisée parallèlement à l'étape E6, le dispositif de mise en oeuvre d'un service minimum DG2 de l'actionneur A2 accède à la deuxième table de routage TA2 enregistrée dans sa mémoire morte MM et la mémorise dans la table de routage courante TRC enregistrée dans la mémoire vive MV de l'actionneur A1. La deuxième table de routage TA2 remplace ainsi la première table de routage de l'actionneur A1.

Puis, lors d'une étape E8, le dispositif de mise en oeuvre d'un service minimum DG1 du capteur C1 commande une procédure d'appairage en fonction de la deuxième table de routage T2. Cette procédure d'appairage permet ici l'appairage direct du capteur C1 avec l'actionneur A1.

Lors de l'étape E9, le capteur C1 détecte un changement de luminosité et le module de traitement UT construit un message de commande CMD et le dispositif de mise en oeuvre du service minimum DG1 commande la transmission du message de commande CMD à l'actionneur A1 lors d'une étape E10.

A titre d'alternative, le message de commande CMD est construit à partir de données collectées par plusieurs capteurs.

Lors d'une étape E11, le message CMD est reçu par l'actionneur A1 et l'actionneur A1 exécute la commande CMD.

Les étapes E9 à E11 sont réitérées une ou plusieurs fois en fonction des mesures effectuées.

Lors d'une étape E12, consécutive à une remise en fonctionnement du module de gestion HAB, le capteur C1 reçoit une demande d'appairage en provenance du module de gestion HAB. Il accède alors à sa première table de routage T1 et l'enregistre dans la table de routage courante TRC en remplacement de la deuxième table de routage T2.

La demande d'appairage transmise par le module de gestion HAB est également reçue par l'actionneur A1 et sur réception de cette demande d'appairage, l'actionneur A1 remplace sa table de gestion courante par sa première table de gestion TA1.

Les mesures effectuées par le capteur C1 sont alors transmises au module de gestion HAB.

A titre d'alternative, lors de la sélection d'une table de sélection, seul un identifiant de table de routage est enregistré en mémoire vive et l'appairage est réalisé en fonction de la table d'appairage dont l'identifiant est enregistré en mémoire vive.

Egalement, à titre d'alternative, les résultats de mesure transmis par le capteur C1 au module de gestion HAB sont des données de collectes mesurées par le capteur mais non traitées par le capteur C1, et lors de l'étape E9, les données de collecte sont transmises au dispositif de mise en oeuvre du service minimum DG1. Lors de l'étape E10, le message de commande CMD est construit par un module de construction de commande (non représenté) du dispositif de mise en oeuvre du service minimum DG1 avant sa transmission à l'actionneur A1.

Selon un mode de réalisation choisi et représenté à la **figure 7**, un dispositif mettant en oeuvre un procédé de mise en oeuvre d'un service minimum selon l'invention est par exemple un dispositif 100 qui comporte de façon connue, notamment une unité de traitement 102 équipée d'un microprocesseur, une mémoire morte de type ROM ou EEPROM 103, une mémoire vive de type RAM 104, une interface de communication 105.

Le dispositif 100 possède également des moyens d'accès à une mémoire d'un capteur associé ou d'un équipement de collecte associé. Par exemple, le dispositif 100 est apte à dialoguer avec le capteur ou le dispositif de collecte via un module de communication (non représenté) par liaison filaire ou sans fil.

La mémoire morte 103 comporte des registres mémorisant un programme d'ordinateur PG comportant des instructions de programme adaptées à réaliser les étapes d'un procédé de mise en oeuvre d'un service minimum selon l'invention.

Lors de la mise sous tension, le programme PG stocké dans la mémoire de type EEPROM 103 est transféré dans la mémoire vive qui contiendra alors un code exécutable ainsi que des registres pour mémoriser les variables nécessaires à la mise en oeuvre d'une étape de réception d'un message d'alerte et d'une étape de transmission ou de réception d'au moins un message de commande d'au moins un équipement à commander via une deuxième liaison de communication, sur réception d'un message d'alerte.

De manière plus générale un moyen de stockage, lisible par un ordinateur ou par un microprocesseur, intégré ou non au dispositif, éventuellement amovible, mémorise un programme mettant en oeuvre les étapes d'un procédé de gestion selon l'invention.

## Revendications

1. Procédé de gestion d'un système (S2) comprenant un module de gestion (HAB), un dispositif de détection (DT) et un ensemble d'équipements (C1, D1, D2, D3, C4) connectés respectivement au module de gestion via une première liaison de communication L1, ledit ensemble d'équipements comprenant au moins un équipement à commander (D1) et au moins un équipement de collecte (C1), ledit module de gestion (HAB) étant apte à déterminer au moins une commande de pilotage en fonction de données reçues d'au moins un équipement de collecte dudit ensemble d'équipements via au moins une dite première liaison de communication et à transmettre ladite au moins une commande de pilotage déterminée à au moins un équipement à commander dudit ensemble d'équipements via au moins une dite première liaison de communication, ledit procédé comportant les étapes suivantes, mises en oeuvre par ledit dispositif de détection:
- surveillance (E1) d'une activité de signalisation applicative en provenance dudit module de gestion;
- détection (E2) d'une absence d'activité de signalisation applicative dans un délai prédéterminé;
le procédé étant **caractérisé en ce qu'**il comporte une étape de déclenchement (E3) d'un service minimum par transmission d'un message d'alerte (ALERT), par ledit dispositif de détection à destination d'au moins un équipement dudit ensemble d'équipements, en cas d'absence d'activité de signalisation applicative détectée,
ledit service minimum correspondant à un service dans lequel les équipements dudit ensemble d'équipements communiquent directement entre eux via une deuxième liaison de communication (L2) et dans lequel un message de commande reçu par un équipement à commander dudit ensemble d'équipements est un message généré par un équipement de collecte dudit ensemble d'équipements et transmis via une dite deuxième liaison de communication (L2) reliant directement ledit équipement de collecte et ledit équipement à commander.

2. Procédé de gestion selon la revendication 1 dans lequel l'étape de surveillance comprend une étape de réception de messages de fonctionnement (MSG1) en provenance du module de gestion et l'absence d'activité est détectée en cas d'absence de réception de message de fonctionnement dans un délai prédéterminé.

3. Procédé de gestion selon la revendication 1 dans lequel l'étape de surveillance comprend une étape d'envoi régulier d'un message de surveillance et l'absence d'activité est détectée par l'absence de réception d'un message de réponse audit message de surveillance dans le délai prédéterminé.

4. Procédé de gestion selon la revendication 1 dans lequel la première liaison de communication est une liaison sans fil et dans lequel l'étape de transmission d'un message d'alerte est effectuée en mode broadcast.

5. Procédé de mise en oeuvre d'un service minimum dans un système (S2) comprenant un module de gestion (HAB), un dispositif de détection (DT) et un ensemble d'équipements (C1, C4, D1, D2, D3) connectés respectivement au module de gestion via une première liaison de communication (L1), ledit ensemble d'équipements comprenant au moins un équipement à commander et au moins un équipement de collecte, ledit module de gestion (HAB) étant apte à déterminer au moins une commande de pilotage en fonction de données reçues d'au moins un équipement de collecte dudit ensemble d'équipements via au moins une dite première liaison de communication et à transmettre ladite au moins une commande de pilotage déterminée à au moins un équipement à commander dudit ensemble d'équipements via au moins une dite première liaison de communication, **caractérisé en ce qu'**il comporte les étapes suivantes, mises en oeuvre par un équipement dudit ensemble d'équipements :
- réception (E4) d'un message d'alerte émis par ledit dispositif de détection et signalant une détection dans un délai prédéterminé, d'une absence d'activité de signalisation applicative du module de gestion, l'émission dudit message d'alerte déclenchant un service minimum dans lequel les équipements dudit ensemble communiquent directement entre eux via une deuxième liaison de communication (L2);
- suite à la réception dudit message d'alerte, génération et transmission (E5) d'au moins un message de commande (MSG2) à au moins un équipement à commander dudit ensemble d'équipements, via une dite deuxième liaison de communication reliant directement ledit équipement et ledit équipement à commander ou réception (E6) d'au moins un message de commande (MSG2) généré par un équipement de collecte dudit ensemble d'équipements et transmis via une deuxième liaison de communication (L2) reliant directement ledit équipement de collecte et ledit équipement.

6. Procédé de mise en oeuvre selon la revendication 5 **caractérisé en ce que** l'étape de transmission est précédée d'une étape d'activation de ladite deuxième liaison de communication avec ledit au moins un équipement à commander.

7. Procédé de mise en oeuvre selon la revendication 6 dans lequel la deuxième liaison de communication reste activée jusqu'à la réception d'un message de demande de connexion en provenance du module de gestion.

8. Dispositif de détection (DT) d'un système (S2), ledit système comprenant un module de gestion (HAB), un dispositif de détection (DT) et un ensemble d'équipements (C1, D1, D2, D3, C4) connectés respectivement au module de gestion via une première liaison de communication (L1), ledit ensemble d'équipements comprenant au moins un équipement à commander (D1) et au moins un équipement de collecte (C1), ledit module de gestion (HAB) étant apte à déterminer au moins une commande de pilotage en fonction de données reçues d'au moins un équipement de collecte dudit ensemble d'équipements via au moins une dite première liaison de communication et à transmettre ladite au moins une commande de pilotage déterminée à au moins un équipement à commander dudit ensemble d'équipements, via au moins une dite première liaison de communication, ledit dispositif de détection étant **caractérisé en ce qu'**il comporte :
- des moyens de surveillance d'une activité de signalisation applicative en provenance dudit module de gestion;
- des moyens de détection d'une absence d'activité de signalisation applicative dans un délai prédéterminé;
- des moyens de déclenchement d'un service minimum par transmission d'un message d'alerte (ALERT), par ledit dispositif de détection à destination d'au moins un équipement dudit ensemble d'équipements, en cas d'absence d'activité de signalisation applicative détectée,
ledit service minimum correspondant à un service dans lequel les équipements dudit ensemble d'équipements communiquent directement entre eux via une deuxième liaison de communication (L2) et dans lequel un message de commande reçu par un équipement à commander dudit ensemble d'équipements est un message généré par un équipement de collecte dudit ensemble d'équipements et transmis via une dite deuxième liaison de communication (L2) reliant directement ledit équipement de collecte et ledit équipement à commander.

9. Equipement d'un système, ledit système comprenant un module de gestion, un dispositif de détection (DT) et un ensemble d'équipements connectés respectivement au module de gestion (HAB) via une première liaison de communication (L1), ledit ensemble d'équipements comprenant au moins un équipement à commander et au moins un équipement de collecte, ledit module de gestion (HAB) étant apte à déterminer au moins une commande de pilotage en fonction de données reçues d'au moins un équipement de collecte dudit ensemble d'équipements via au moins une dite première liaison de communication et à transmettre ladite au moins une commande de pilotage déterminée à au moins un équipement à commander dudit ensemble d'équipements, via au moins une dite première liaison de communication, ledit équipement étant apte à transmettre des données et/ou à recevoir des données vers/du module de gestion via une dite première liaison de communication, ledit équipement étant **caractérisé en ce qu'**il comporte :
- des moyens de réception d'un message d'alerte émis par le dispositif de détection et signalant une détection dans un délai prédéterminé, d'une absence d'activité de signalisation applicative du module de gestion, l'émission dudit message d'alerte déclenchant un service minimum dans lequel les équipements dudit ensemble d'équipements communiquent directement entre eux via une deuxième liaison de communication (L2);
- des moyens de communication aptes, suite à la réception du message d'alerte, à générer et à transmettre au moins un message de commande à au moins un équipement à commander dudit ensemble d'équipements, via une dite deuxième liaison de communication reliant directement ledit équipement et ledit équipement à commander, et/ou à recevoir au moins un message de commande généré par un équipement de collecte dudit ensemble d'équipements et transmis via une dite deuxième liaison de communication reliant directement ledit équipement de collecte et ledit équipement.

10. Equipement selon la revendication 9 dans lequel les moyens de communication comprennent en outre des moyens d'activation de ladite deuxième liaison de communication.

11. Equipement selon l'une des revendications 9 ou 10 **caractérisé en ce qu'**il comprend en outre un dispositif de détection selon la revendication 8.

12. Système (S2) comprenant un module de gestion et un ensemble d'équipements connectés respectivement au module de gestion via une première liaison de communication, ledit ensemble d'équipements comprenant au moins un équipement à commander et au moins un équipement de collecte, ledit module de gestion étant apte à déterminer au moins une commande de pilotage en fonction de données reçues d'au moins un équipement de collecte et à transmettre ladite au moins une commande de pilotage déterminée à au moins un équipement à commander via au moins une dite première liaison de communication, **caractérisé en ce qu'**il comprend en outre au moins un dispositif de détection selon la revendication 8 et **en ce que** au moins un équipement dudit ensemble d'équipements est conforme à la revendication 9.

13. Produit programme d'ordinateur comprenant des instructions pour mettre en oeuvre les étapes du procédé de gestion selon la revendication 1, lorsqu'il est chargé et exécuté par un processeur.

14. Produit programme d'ordinateur comprenant des instructions pour mettre en oeuvre les étapes du procédé de mise en oeuvre d'un service minimum selon la revendication 5, lorsqu'il est chargé et exécuté par un processeur.

## Patentansprüche

1. Verfahren zur Verwaltung eines Systems (S2) umfassend ein Verwaltungsmodul (HAB), eine Erkennungsvorrichtung (DT) und eine Anordnung von Einrichtungen (C1, D1, D2, D3, C4), die jeweils über eine erste Kommunikationsverbindung L1 mit dem Verwaltungsmodul verbunden sind, die Anordnung von Einrichtungen umfassend mindestens eine zu steuernde Einrichtung (D1) und mindestens eine Sammeleinrichtung (C1), wobei das Verwaltungsmodul (HAB) geeignet ist, mindestens einen Steuerungsbefehl in Abhängigkeit von Daten zu bestimmen, die von mindestens einer Sammeleinrichtung der Anordnung von Einrichtungen über mindestens eine solche erste Kommunikationsverbindung empfangen werden, und den bestimmten mindestens einen Steuerungsbefehl an mindestens eine zu steuernde Einrichtung der Anordnung von Einrichtungen über mindestens eine solche erste Kommunikationsverbindung zu übertragen, wobei das Verfahren die folgenden Schritte aufweist, die von der Erkennungsvorrichtung umgesetzt werden:
- Überwachen (E1) einer Anwendungssignalisierungsaktivität von dem Verwaltungsmodul;
- Erkennen (E2) eines Nichtvorliegens von Anwendungssignalisierungsaktivität in einem vorbestimmten Zeitraum;
wobei das Verfahren **dadurch gekennzeichnet ist, dass** es einen Schritt des Auslösens (E3) eines Mindestdienstes durch Übertragung einer Warnnachricht (ALERT) von der Erkennungsvorrichtung an mindestens eine Einrichtung der Anordnung von Einrichtungen bei Nichtvorliegen von erkannter Anwendungssignalisierungsaktivität umfasst,
wobei der Mindestdienst einem Dienst entspricht, wobei die Einrichtungen der Anordnung von Einrichtungen über eine zweite Kommunikationsverbindung (L2) direkt miteinander kommunizieren und wobei eine Steuerungsnachricht, die von einer zu steuernden Einrichtung der Anordnung von Einrichtungen empfangen wird, eine Nachricht ist, die von einer Sammeleinrichtung der Anordnung von Einrichtungen erzeugt wird und über eine solche zweite Kommunikationsverbindung (L2) übertragen wird, welche die Sammeleinrichtung und die zu steuernde Einrichtung direkt verbindet.

2. Verfahren zur Verwaltung nach Anspruch 1, wobei der Schritt des Überwachens einen Schritt des Empfangens von Betriebsnachrichten (MSG1) von dem Verwaltungsmodul umfasst, und das Nichtvorliegen von Aktivität bei Nichtvorliegen von Empfang einer Betriebsnachricht in einem vorbestimmten Zeitraum erkannt wird.

3. Verfahren zur Verwaltung nach Anspruch 1, wobei der Schritt des Überwachens einen Schritt des regelmäßigen Sendens einer Überwachungsnachricht umfasst, und das Nichtvorliegen von Aktivität durch das Nichtvorliegen von Empfang einer Antwortnachricht auf die Überwachungsnachricht in einem vorbestimmten Zeitraum erkannt wird.

4. Verfahren zur Verwaltung nach Anspruch 1, wobei die erste Kommunikationsverbindung eine drahtlose Verbindung ist und wobei der Schritt des Übertragens einer Warnnachricht im Sendemodus durchgeführt wird.

5. Verfahren zur Umsetzung eines Mindestdienstes in einem System (S2) umfassend ein Verwaltungsmodul (HAB), eine Erkennungsvorrichtung (DT) und eine Anordnung von Einrichtungen (C1, C4, D1, D2, D3), die jeweils über eine erste Kommunikationsverbindung (L1) mit dem Verwaltungsmodul verbunden sind, die Anordnung von Einrichtungen umfassend mindestens eine zu steuernde Einrichtung und mindestens eine Sammeleinrichtung, wobei das Verwaltungsmodul (HAB) geeignet ist, mindestens einen Steuerungsbefehl in Abhängigkeit von Daten zu bestimmen, die von mindestens einer Sammeleinrichtung der Anordnung von Einrichtungen über mindestens eine solche erste Kommunikationsverbindung empfangen werden, und den bestimmten mindestens einen Steuerungsbefehl an mindestens eine zu steuernde Einrichtung der Anordnung von Einrichtungen über mindestens eine solche erste Kommunikationsverbindung zu übertragen, **dadurch gekennzeichnet, dass** es die folgenden Schritte aufweist, die von einer Einrichtung der Anordnung von Einrichtungen umgesetzt werden:
- Empfangen (E4) einer Warnnachricht, die von der Erkennungsvorrichtung ausgesendet wird und eine Erkennung eines Nichtvorliegens von Anwendungssignalisierungsaktivität des Verwaltungsmoduls in einem vorbestimmten Zeitraum signalisiert, wobei die Aussendung der Warnnachricht einen Mindestdienst auslöst, wobei die Einrichtungen der Anordnung über eine zweite Kommunikationsverbindung (L2) direkt miteinander kommunizieren;
- nach dem Empfang der Warnnachricht, Erzeugen und Übertragen (E5) mindestens einer Steuerungsnachricht (MSG2) an mindestens eine zu steuernde Einrichtung der Anordnung von Einrichtungen über eine solche zweite Kommunikationsverbindung, welche die Einrichtung und die zu steuernde Einrichtung direkt verbindet, oder Empfangen (E6) mindestens einer Steuerungsnachricht (MSG2), die von einer Sammeleinrichtung der Anordnung von Ausrüstungen erzeugt und über eine zweite Kommunikationsverbindung (L2), welche die Sammeleinrichtung und die Einrichtung direkt verbindet, übertragen wird.

6. Verfahren zur Umsetzung nach Anspruch 5, **dadurch gekennzeichnet, dass** dem Schritt des Übertragens ein Schritt des Aktivierens der zweiten Kommunikationsverbindung mit der mindestens einen zu steuernden Einrichtung vorangeht.

7. Verfahren zur Umsetzung nach Anspruch 6, wobei die zweite Kommunikationsverbindung bis zum Empfang einer Nachricht zur Anforderung einer Verbindung von dem Verwaltungsmodul aktiviert bleibt.

8. Vorrichtung (DT) zur Erkennung eines Systems (S2), das System umfassend ein Verwaltungsmodul (HAB), eine Erkennungsvorrichtung (DT) und eine Anordnung von Einrichtungen (C1, D1, D2, D3, C4), die jeweils über eine erste Kommunikationsverbindung (L1) mit dem Verwaltungsmodul verbunden sind, die Anordnung von Einrichtungen umfassend mindestens eine zu steuernde Einrichtung (D1) und mindestens eine Sammeleinrichtung (C1), wobei das Verwaltungsmodul (HAB) geeignet ist, mindestens einen Steuerungsbefehl in Abhängigkeit von Daten zu bestimmen, die von mindestens einer Sammeleinrichtung der Anordnung von Einrichtungen über mindestens eine solche erste Kommunikationsverbindung empfangen werden, und den bestimmten mindestens einen Steuerungsbefehl an mindestens eine zu steuernde Einrichtung der Anordnung von Einrichtungen über mindestens eine solche erste Kommunikationsverbindung zu übertragen, wobei die Erkennungsvorrichtung **dadurch gekennzeichnet ist, dass** sie Folgendes aufweist:
- Mittel zur Überwachung einer Anwendungssignalisierungsaktivität von dem Verwaltungsmodul;
- Mittel zur Erkennung eines Nichtvorliegens von Anwendungssignalisierungsaktivität in einem vorbestimmten Zeitraum;
- Mittel zur Auslösung eines Mindestdienstes durch Übertragung einer Warnnachricht (ALERT) von der Erkennungsvorrichtung an mindestens eine Einrichtung der Anordnung von Einrichtungen bei Nichtvorliegen von erkannter Anwendungssignalisierungsaktivität,
wobei der Mindestdienst einem Dienst entspricht, wobei die Einrichtungen der Anordnung von Einrichtungen über eine zweite Kommunikationsverbindung (L2) direkt miteinander kommunizieren und wobei eine Steuerungsnachricht, die von einer zu steuernden Einrichtung der Anordnung von Einrichtungen empfangen wird, eine Nachricht ist, die von einer Sammeleinrichtung der Anordnung von Einrichtungen erzeugt wird und über eine solche zweite Kommunikationsverbindung (L2) übertragen wird, welche die Sammeleinrichtung und die zu steuernde Einrichtung direkt verbindet.

9. Einrichtung eines Systems, das System umfassend ein Verwaltungsmodul, eine Erkennungsvorrichtung (DT) und eine Anordnung von Einrichtungen, die jeweils über eine erste Kommunikationsverbindung (L1) mit dem Verwaltungsmodul (HAB) verbunden sind, die Anordnung von Einrichtungen umfassend mindestens eine zu steuernde Einrichtung und mindestens eine Sammeleinrichtung, wobei das Verwaltungsmodul (HAB) geeignet ist, mindestens einen Steuerungsbefehl in Abhängigkeit von Daten zu bestimmen, die von mindestens einer Sammeleinrichtung der Anordnung von Einrichtungen über mindestens eine solche erste Kommunikationsverbindung empfangen werden, und den bestimmten mindestens einen Steuerungsbefehl an mindestens eine zu steuernde Einrichtung der Anordnung von Einrichtungen über mindestens eine solche erste Kommunikationsverbindung zu übertragen, wobei die Einrichtung geeignet ist, Daten über eine solche erste Kommunikationsverbindung zu dem Verwaltungsmodul hin zu übertragen bzw. von diesem zu empfangen, wobei die Einrichtung **dadurch gekennzeichnet ist, dass** sie Folgendes aufweist:
- Mittel zum Empfang einer Warnnachricht, die von der Erkennungsvorrichtung ausgesendet wird und eine Erkennung eines Nichtvorliegens von Anwendungssignalisierungsaktivität des Verwaltungsmoduls in einem vorbestimmten Zeitraum signalisiert, wobei die Aussendung der Warnnachricht einen Mindestdienst auslöst, wobei die Einrichtungen der Anordnung von Einrichtungen über eine zweite Kommunikationsverbindung (L2) direkt miteinander kommunizieren;
- Kommunikationsmittel, die geeignet sind, nach dem Empfang der Warnnachricht mindestens eine Steuerungsnachricht an mindestens eine zu steuernde Einrichtung der Anordnung von Einrichtungen über eine solche zweite Kommunikationsverbindung, welche die Einrichtung und die zu steuernde Einrichtung direkt verbindet, zu erzeugen und zu übertragen, und/oder mindestens eine Steuerungsnachricht zu empfangen, die von einer Sammeleinrichtung der Anordnung von Ausrüstungen erzeugt und über eine zweite Kommunikationsverbindung, welche die Sammeleinrichtung und die Einrichtung direkt verbindet, übertragen wird.

10. Einrichtung nach Anspruch 9, wobei die Kommunikationsmittel ferner Mittel zur Aktivierung der zweiten Kommunikationsverbindung umfassen.

11. Einrichtung nach einem der Ansprüche 9 oder 10, **dadurch gekennzeichnet, dass** sie ferner eine Vorrichtung zur Erkennung nach Anspruch 8 umfasst.

12. System (S2) umfassend ein Verwaltungsmodul und eine Anordnung von Einrichtungen, die jeweils über eine erste Kommunikationsverbindung mit dem Verwaltungsmodul verbunden sind, die Anordnung von Einrichtungen umfassend mindestens eine zu steuernde Einrichtung und mindestens eine Sammeleinrichtung, wobei das Verwaltungsmodul geeignet ist, mindestens einen Steuerungsbefehl in Abhängigkeit von Daten zu bestimmen, die von mindestens einer Sammeleinrichtung empfangen werden, und den bestimmten mindestens einen Steuerungsbefehl an mindestens eine zu steuernde Einrichtung über mindestens eine solche erste Kommunikationsverbindung zu übertragen, **dadurch gekennzeichnet, dass** es ferner mindestens eine Vorrichtung zur Erkennung nach Anspruch 8 umfasst, und dadurch, dass mindestens eine Einrichtung der Anordnung von Einrichtungen dem Anspruch 9 entspricht.

13. Computerprogrammprodukt umfassend Anweisungen, um die Schritte des Verfahrens nach Anspruch 1 umzusetzen, wenn es von einem Prozessor geladen ist und ausgeführt wird.

14. Computerprogrammprodukt umfassend Anweisungen, um die Schritte des Verfahrens zur Umsetzung eines Mindestdienstes nach Anspruch 5 umzusetzen, wenn es von einem Prozessor geladen ist und ausgeführt wird.

## Claims

1. Method of managing a system (S2) comprising a home automation box (HAB), a detection device (DT) and a set of device apparatuses (C1, D1, D2, D3, C4) respectively connected to the home automation box via a first communication link (L1), said set of apparatuses comprising at least one apparatus to be controlled (D1) and at least one data gathering apparatus (C1), said home automation box (HAB) being able to determine at least one control command as a function of data received from at least one data gathering apparatus of said set of apparatuses via at least a said first communication link and to transmit said at least one determined control command to at least one apparatus to be controlled of said set of apparatuses via at least a said first communication link, said method comprising the following steps, implemented by said detection device:
- monitoring (E1) an application signalling activity coming from said home automation box;
- detection (E2) of an absence of application signalling activity during a predetermined time period; the method being **characterized in that** it comprises a step (E3) of initiating a minimum service by the transmission of an alert message (ALERT), by said detection device to at least one apparatus of said set of apparatuses, in the case of absence of detected application signalling activity,
said minimum service corresponding to a service in which the apparatuses of said set of apparatuses communicate directly between each other via a second communication link (L2) and in which a control message received by an apparatus to be controlled of said set of apparatuses is a message generated by a data gathering apparatus of said set of apparatuses and transmitted via a said second communication link (L2) directly connecting said data gathering apparatus and said apparatus to be controlled.

2. Management method according to Claim 1, **characterized in that** the monitoring step comprises a step of reception of functioning messages (MSG1) coming from the home automation box and the absence of activity is detected in the case of absence of reception of a functioning message during a predetermined time period.

3. Management method according to Claim 1, **characterized in that** the monitoring step comprises a step of regularly sending a monitoring message and the absence of activity is detected by the absence of reception of a message of response to said monitoring message during the predetermined time period.

4. Management method according to Claim 1, **characterized in that** the first communication link is a wireless link and **in that** the step of transmission of an alert message is carried out in broadcast mode.

5. Method of implementing a minimum service in a system (S2) comprising a home automation box (HAB), a detection device (DT) and a set of apparatuses (C1, C4, D1, D2, D3) respectively connected to the home automation box via a first communication link (L1), said set of apparatuses comprising at least one apparatus to be controlled and at least one data gathering apparatus (C1), said home automation box (HAB) being able to determine at least one control command as a function of data received from at least one data gathering apparatus of said set of apparatuses via at least a said first communication link and to transmit said at least one determined control command to at least one apparatus to be controlled of said set of apparatuses via at least a said first communication link, **characterized in that** it comprises the following steps implemented by said set of apparatuses:
- reception (E4) of an alert message transmitted by the detection device and signalling a detection, during a predetermined time period, of an absence of application signalling activity of the home automation box, the transmission of said alert message initiating a minimum service in which the apparatuses of said set communicate directly between each other via a second communication link (L2);
- following the reception of said alert message, generation and transmission (E5) of at least one control message (MSG2) to at least one apparatus to be controlled of said set of apparatuses, via a said second communication link directly connecting said apparatus and said apparatus to be controlled, or reception (E6) of at least one control message (MSG2) generated by a data gathering apparatus of said set of apparatuses and transmitted via a second communication link (L2) directly connecting said data gathering apparatus and said apparatus.

6. Implementation method according to Claim 5, **characterized in that** the transmission step is preceded by a step of activation of said second communication link with said at least one apparatus to be controlled.

7. Implementation method according to Claim 6, **characterized in that** the second communication link remains activated until the reception of a connection request message coming from the home automation box.

8. Detection device (DT) of a system (S2) said system comprising a home automation box (HAB), a detection device (DT) and a set of device apparatuses (C1, D1, D2, D3, C4) respectively connected to the home automation box via a first communication link (L1), said set of apparatuses comprising at least one apparatus to be controlled (D1) and at least one data gathering apparatus (C1), said home automation box (HAB) being able to determine at least one control command as a function of data received from at least one data gathering apparatus of said set of apparatuses via at least a said first communication link and to transmit said at least one determined control command to at least one apparatus to be controlled of said set of apparatuses via at least a said first communication link, said detection device being **characterized in that** it comprises:
- means of monitoring an application signalling activity coming from said home automation box;
- means of detection of an absence of application signalling activity during a predetermined time period;
- means of initiating a minimum service by transmission of an alert message (ALERT), by said detection device to at least one apparatus of said set of apparatuses, in the case of absence of detected application signalling activity,
said minimum service corresponding to a service in which the apparatuses of said set of apparatuses communicate directly between each other via a second communication link (L2) and in which a control message received by an apparatus to be controlled of said set of apparatuses is a message generated by a data gathering apparatus of said set of apparatuses and transmitted via a said second communication link (L2) directly connecting said data gathering apparatus and said apparatus to be controlled.

9. Apparatus of a system, said system comprising a home automation box, a detection device (DT) and a set of apparatuses respectively connected to the home automation box (HAB) via a first communication link (L1), said set of apparatuses comprising at least one apparatus to be controlled and at least one data gathering apparatus, said home automation box (HAB) being able to determine at least one control command as a function of data received from at least one data gathering apparatus of said set of apparatuses via at least a said first communication link and to transmit said at least one determined control command to at least one apparatus to be controlled of said set of apparatuses via at least a said first communication link, said apparatus being able to transmit data and/or to receive data to/from the home automation box via a first communication link, said apparatus being **characterized in that** it comprises:
- means of reception of an alert message transmitted by the detection device and signalling a detection, during a predetermined time period, of an absence of application signalling activity of the home automation box, the transmission of said alert message initiating a minimum service in which the apparatuses of said set of apparatuses communicate directly between each other via a second communication link (L2);
- communications means able, after the reception of the alert message, to generate and to transmit at least one control message to at least one apparatus to be controlled of said set of apparatuses, via a said second communication link directly connecting said apparatus and said apparatus to be controlled, and/or to receive at least one control message generated by a data gathering apparatus of said set of apparatuses and transmitted via a said second communication link directly connecting said data gathering apparatus and said apparatus.

10. Apparatus according to Claim 9, **characterized in that** the communication means comprise moreover means of activation of said second communication link.

11. Apparatus according to one of Claims 9 or 10, **characterized in that** it comprises moreover a detection device according to Claim 8.

12. System (S2) comprising a home automation box and a set of apparatuses respectively connected to the home automation box via a first communication link, said set of apparatuses comprising at least one apparatus to be controlled and at least one data gathering apparatus, said home automation box being able to determine at least one control command as a function of data received from at least one data gathering apparatus and to transmit said at least one determined control command to at least one apparatus to be controlled via at least a said first communication link, **characterized in that** it comprises moreover at least one detection device according to Claim 8 and **in that** at least one apparatus of said set of apparatuses is in accordance with Claim 9.

13. Computer program product comprising instructions for implementing the steps of the management method according to Claim 1, when it is loaded and is executed by a processor.

14. Computer program product comprising instructions for implementing the steps of the method for implementing a minimum service according to Claim 5, when it is loaded and is executed by a processor.
